# EUROPEAN PATENT APPLICATION

(11) **EP 4 319 260 A1**
(43) Date of publication of application: **07.02.2024**
(21) Application number: 22778939.3
(22) Date of filing: 29.03.2022
(51) Int. Cl.: H04W 24/08, H04W 24/10

(54) **INTER-CELL MEASUREMENT REPORT-BASED CONFIGURATION METHOD AND DEVICE**

(30) Priority: 01.04.2021 CN 202110356729
(71) Applicant: Datang Mobile Communications Equipment Co., Ltd., Beijing 100085 (CN)
(72) Inventor: LI, Hui, Beijing 100085 (CN); GAO, Qiubin, Beijing 100085 (CN); CHEN, Runhua, Beijing 100085 (CN); LUO, Yajuan, Beijing 100085 (CN)
(74) Representative: Studio Torta S.p.A.
(86) International application number: PCT/CN2022/083684
(87) International publication number: WO 2022/206757

(57) **Abstract**

Provided are a configuration method and a configuration device for inter-cell measurement reporting. The method comprises: receiving, by a terminal, a first signaling transmitted by a base station; and performing or cancelling, by the terminal, a measurement on a target reference signal resource based on the first signaling.

## Description

### CROSS-REFERENCE TO RELATED APPLICATION

This application claims a priority to Chinese Patent Application No. 202110356729.2 filed on April 1, 2021, the disclosure of which is incorporated hereby by reference its entirety.

### TECHNICAL FIELD

The present disclosure relates to the field of mobile communication technology, in particular to a configuration method and a configuration device for inter-cell measurement reporting.

### BACKGROUND

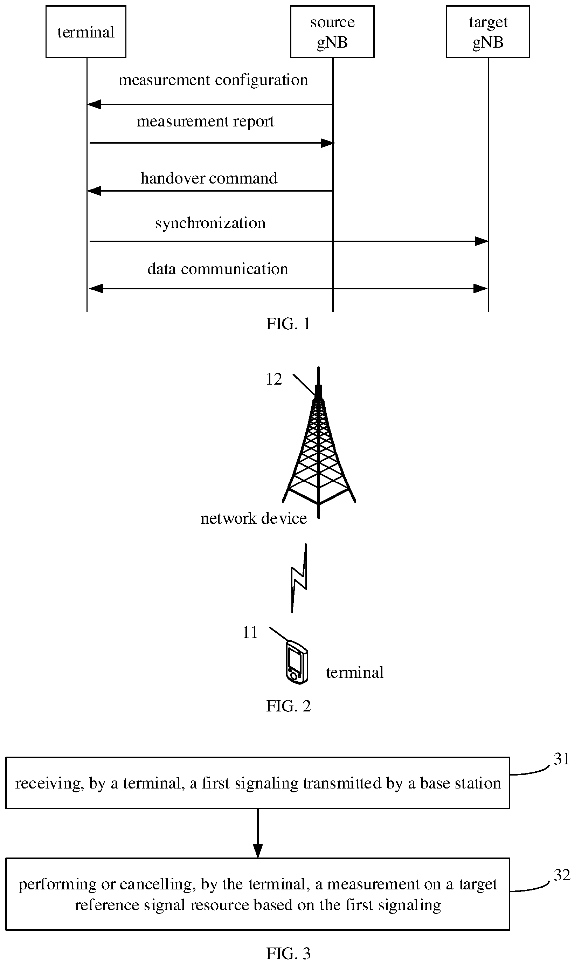

In a new radio (New Radio, NR) system, a cell handover procedure mainly includes the following steps as shown in FIG. 1:
1) a source base station (gNB) performs a measurement configuration for a terminal, and a measurement result of the terminal is to be used in assisting the source gNB in making a handover decision;
2) the terminal performs a measurement reporting according to the measurement configuration, and the measurement result is reported to the source gNB;
3) the source gNB transmits a handover command to the terminal, where the handover command carries RRC reconfiguration information;
4) after receiving the handover command, the terminal performs synchronization with a target gNB, and accesses to a target cell through a contention-based random access procedure or a contention-free random access procedure; and
5) the target gNB transmits data to the terminal.

In the first step, the measurement configuration performed by the source gNB for a terminal mainly includes: configuring the terminal to perform measurements on synchronization signal and PBCH blocks (Synchronization Signal and PBCH block, SSB) of a serving cell and a neighboring cell, and on channel state information reference signals for mobility (CSI-RS for mobility) of the serving cell and the neighboring cell. In the second step, the measurement result reported by the terminal to the source gNB is a layer 3 reference signal received power (L3-Reference Signal Received Power, L3-RSRP), which is implemented by introducing an additional filter in layer 3. In the fourth step, the terminal adopts the contention-based random access procedure or the contention-free random access procedure. For example, a random access procedure including the following four steps may be adopted.

Step 1: the terminal transmits a random access preamble (preamble) sequence, namely message 1 (Msg1), on a physical random access channel (Physical Random Access Channel, PRACH) resource.

Step 2: the terminal receives a random access response (Random Access Response, RAR) message, namely message 2 (Msg2), on physical downlink control channel (Physical Downlink Control Channel, PDCCH)/physical downlink shared channel (Physical Downlink Shared Channel, PDSCH). The message also includes uplink timing advance (Timing Advance, TA), uplink scheduling grant for Msg3 transmission of the UE, and a temporary cell radio network temporary identity (Temporary Cell-Radio Network Temporary Identity, TC-RNTI).

Step 3: the terminal transmits a radio resource control (Radio Resource Control, RRC) request, namely message 3 (Msg3), on physical uplink shared channel (Physical Uplink Shared Channel, PUSCH).

Step 4: the terminal receives a contention resolution message, namely message 4 (Msg4), on physical downlink shared channel (Physical Downlink Shared Channel, PDSCH) and upgrades TC-RNTI to cell radio network temporary identity (Cell RNTI, C-RNTI).

In the fifth step of FIG. 1, before transmitting the data to the terminal, the target gNB needs to configure channel measurement information for the terminal, and a new data communication is performed after the terminal reports channel state information.

In the relevant communication systems, the above measurement reporting implementation at the terminal is not flexible.

### SUMMARY

At least one embodiment of the present disclosure provides a configuration method and a configuration device for inter-cell measurement reporting, which improve the flexibility of measurement reporting configuration by configuring a terminal to measure a reference signal of a neighboring cell and to feed back a measurement result.

According to one aspect of the present disclosure, at least one embodiment provides a configuration method for inter-cell measurement reporting, which includes:
receiving, by a terminal, a first signaling transmitted by a base station; and
performing or cancelling, by the terminal, a measurement on a target reference signal resource based on the first signaling.

Optionally, according to at least one embodiment of the present disclosure, the method further includes: transmitting a first signaling to the terminal, where the first signaling is used to activate or deactivate the measurement on a target reference signal resource.

Optionally, according to at least one embodiment of the present disclosure, the report configuration information includes at least one report setting group, the report setting group includes at least one report setting, the report setting is associated with at least one resource setting, the resource setting includes at least one reference signal resource set, and the reference signal resource set includes at least one reference signal resource; the first signaling includes indication information for at least one target report setting group;
before the performing or cancelling the measurement on the target reference signal resource based on the first signaling, the method further includes: determining, based on the first signaling, a target report setting included in the target report setting group and a target resource setting associated with the target report setting, and determining a reference signal resource set included in the target resource setting to obtain the target reference signal resource.

Optionally, according to at least one embodiment of the present disclosure, the report configuration information includes at least one report setting, e each report setting corresponds to a reporting type; the report setting is associated with at least one resource setting, the resource setting includes at least one reference signal resource set, and the reference signal resource set includes at least one reference signal resource; the first signaling includes indication information for at least one target reporting type;
before the performing or cancelling the measurement on the target reference signal resource based on the first signaling, the method further includes: determining, based on the first signaling, a target report setting corresponding to the target reporting type and a target resource setting associated with the target report setting, and determining a reference signal resource set included in the target resource setting to obtain the target reference signal resource.

Optionally, according to at least one embodiment of the present disclosure, the reporting type includes: periodic reporting, semi-persistent reporting, or aperiodic reporting; or
the reporting type includes: performing a measurement on the reference signal resource of the serving cell and reporting a corresponding measurement result, or performing a measurement on the reference signal resource of the neighboring cell and reporting a corresponding measurement result.

Optionally, according to at least one embodiment of the present disclosure, the report configuration information includes at least one trigger state, each trigger state is associated with at least one report setting; the report setting is associated with at least one resource setting, the resource setting includes at least one reference signal resource set, and the reference signal resource set includes at least one reference signal resource; the first signaling includes indication information for at least one target trigger state;
before the performing or cancelling the measurement on the target reference signal resource based on the first signaling, the method further includes: determining, based on the first signaling, a target report setting associated with the target trigger state and a target resource setting associated with the target report setting, and determining a reference signal resource set included in the target resource setting to obtain the target reference signal resource.

Optionally, according to at least one embodiment of the present disclosure, the report configuration information includes at least one reference signal resource set, and the reference signal resource set includes at least one reference signal resource; the first signaling includes indication information for at least one target reference signal resource set;
before performing or cancelling the measurement on the target reference signal resource based on the first signaling, the method further includes: determining the target reference signal resource set based on the first signaling to obtain the target reference signal resource.

Optionally, according to at least one embodiment of the present disclosure, the report setting or the resource setting is configured with at least one expected arrival time parameter, where the expected arrival time parameter is used to indicate a difference between an arrival time of the reference signal resource of the neighboring cell and an arrival time of the reference signal resource of the serving cell in the report setting or the resource setting.

Optionally, according to at least one embodiment of the present disclosure, the performing, by the terminal, the measurement on the target reference signal resource based on the first signaling includes:
during the performing the measurement on the target reference signal resource in the report setting or the resource setting, after a measurement on the target reference signal resource of the serving cell has been done, waiting for a time indicated by the expected arrival time parameter, and then performing a measurement on the target reference signal resource of the neighboring cell.

Optionally, according to at least one embodiment of the present disclosure, the report setting includes at least one of following information:
indication information for indicating to report measurement values of a first quantity of cells;
indication information for indicating to report a measurement value that meets a preset threshold;
indication information for indicating to report measurement values of a second quantity of preset cells;
indication information for indicating a threshold for triggering the reporting.

Optionally, according to at least one embodiment of the present disclosure, the resource setting further includes at least one cell identifier, and the cell identifier is configured to be corresponding to the reference signal resource set or the reference signal resource.

Optionally, according to at least one embodiment of the present disclosure, each reference signal resource in the resource setting is numbered with a resource index according to a first rule, and reference signal resources of respective cells have different index numbers.

Optionally, according to at least one embodiment of the present disclosure, the report setting includes a report setting for the serving cell and a report setting for the neighboring cell.

Optionally, according to at least one embodiment of the present disclosure, the method further includes:
receiving a second signaling, the second signaling being used to activate or deactivate reporting a measurement result by the terminal; and
reporting, by the terminal, the measurement result of the target reference signal resource, or cancelling, by the terminal, the reporting of the measurement result of the target reference signal resource based on the second signaling.

Optionally, according to at least one embodiment of the present disclosure, the reference signal resource includes one or more of: synchronization signal block (SSB), channel state information reference signal (CSI-RS) for mobility, or CSI-RS for tracking.

According to another aspect of the present disclosure, at least one embodiment provides a configuration method for inter-cell measurement reporting, which includes: transmitting a first signaling to a terminal, where the first signaling is used to activate or deactivate a measurement on a target reference signal resource.

Optionally, according to at least one embodiment of the present disclosure, the method further includes: transmitting report configuration information to the terminal, where the report configuration information is used to configure reference signal resources for a serving cell and a neighboring cell.

Optionally, according to at least one embodiment of the present disclosure, the report configuration information includes at least one report setting group, the report setting group includes at least one report setting, the report setting is associated with at least one resource setting, the resource setting includes at least one reference signal resource set, and the reference signal resource set includes at least one reference signal resource; the first signaling includes indication information for at least one target report setting group.

Optionally, according to at least one embodiment of the present disclosure, the report configuration information includes at least one report setting, each report setting corresponds to a reporting type; the report setting is associated with at least one resource setting, the resource setting includes at least one reference signal resource set, and the reference signal resource set includes at least one reference signal resource; the first signaling includes indication information for at least one target reporting type.

Optionally, according to at least one embodiment of the present disclosure, the reporting type includes: periodic reporting, semi-persistent reporting, or aperiodic reporting; or
the reporting type includes: performing a measurement on the reference signal resource of the serving cell and reporting a measurement result, or performing a measurement on the reference signal resource of the neighboring cell and r reporting a measurement result.

Optionally, according to at least one embodiment of the present disclosure, the report configuration information includes at least one trigger state, each trigger state is associated with at least one report setting; the report setting is associated with at least one resource setting, the resource setting includes at least one reference signal resource set, and the reference signal resource set includes at least one reference signal resource; the first signaling includes indication information for at least one target trigger state.

Optionally, according to at least one embodiment of the present disclosure, the report configuration information includes at least one reference signal resource set, and the reference signal resource set includes at least one reference signal resource; the first signaling includes indication information for at least one target reference signal resource set.

Optionally, according to at least one embodiment of the present disclosure, the report setting or the resource setting is configured with at least one expected arrival time parameter, where the expected arrival time parameter is used to indicate a difference between an arrival time of the reference signal resource of the neighboring cell and an arrival time of the reference signal resource of the serving cell in the report setting or the resource setting.

Optionally, according to at least one embodiment of the present disclosure, the report setting includes at least one of following information:
indication information for indicating to report measurement values of a first quantity of cells;
indication information for indicating to report a measurement value that meets a preset threshold;
indication information for indicating to report measurement values of a second quantity of preset cells;
indication information for indicating a threshold for triggering the reporting.

Optionally, according to at least one embodiment of the present disclosure, the resource setting further includes at least one cell identifier, and the cell identifier is configured to be corresponding to the reference signal resource set or the reference signal resource.

Optionally, according to at least one embodiment of the present disclosure, each reference signal resource in the resource setting is numbered with a resource index according to a first rule, and reference signal resources of respective cells have different index numbers.

Optionally, according to at least one embodiment of the present disclosure, the report setting includes a report setting for the serving cell and a report setting for the neighboring cell.

Optionally, according to at least one embodiment of the present disclosure, the method further includes: transmitting a second signaling to the terminal, the second signaling being used to activate or deactivate reporting a measurement result by the terminal.

Optionally, according to at least one embodiment of the present disclosure, the reference signal resource includes one or more of: synchronization signal block (SSB), channel state information reference signal (CSI-RS) for mobility, or CSI-RS for tracking.

According to another aspect of the present disclosure, at least one embodiment provides a terminal, which includes: a memory, a transceiver, and a processor, the memory is configured to store a computer program; the transceiver is configured to transmit and receive data under control of the processor; and the processor is configured to read the computer program in the memory to perform following operations:
receiving a first signaling transmitted by a base station; and
performing or cancelling a measurement on a target reference signal resource based on the first signaling.

According to another aspect of the present disclosure, at least one embodiment provides a terminal, which includes:
a receiving unit, configured to receive a first signaling transmitted by a base station; and
a measurement unit, configured to perform or cancel a measurement on a target reference signal resource based on the first signaling.

According to another aspect of the present disclosure, at least one embodiment provides a network-side device, which includes: a memory, a transceiver, and a processor, the memory is configured to store a computer program; the transceiver is configured to transmit and receive data under control of the processor; and the processor is configured to read the computer program in the memory to perform following operations: transmitting a first signaling to a terminal, where the first signaling is used to activate or deactivate a measurement on a target reference signal resource.

According to another aspect of the present disclosure, at least one embodiment provides a network-side device, which includes: a transmission unit, configured to transmit a first signaling to a terminal, where the first signaling is used to activate or deactivate a measurement on a target reference signal resource.

According to another aspect of the present disclosure, at least one embodiment provides a processor readable storage medium, where the processor readable storage medium stores a computer program, and the computer program is used to enable the processor to perform the method as described above.

According to the configuration method and configuration device for inter-cell measurement reporting provided by the embodiments of the present disclosure, the measurement reporting configuration for the terminal can be flexibly implemented, by configuring the terminal to measure the reference signal resource of the neighboring cell and to feed back the measurement result. In addition, according to the embodiments of the present disclosure, the activation and deactivation of a measurement can be implemented in a grouping manner, and an expected arrival time parameter is configured, which can save the measurement time of the terminal and reduce power consumption of the terminal. Moreover, the embodiments of the present disclosure can also reduce the latency due to the cell handover.

### BRIEF DESCRIPTION OF THE DRAWINGS

By reading the detailed description of the preferred implementations below, multiple other advantages and benefits will become clear to person of ordinary skills in the art. The accompanying drawings are only intended to illustrate the preferred implementations and are not considered as a limitation of the present disclosure. Throughout the drawings, a same component is represented by a same reference sign. In the accompanying drawings:
FIG. 1 is a schematic diagram of a cell handover procedure of a NR system in the related technologies;
FIG. 2 is a schematic diagram of an application scenario for a configuration method for inter-cell measurement reporting according to an embodiment of the present disclosure;
FIG. 3 is a flow chart of a configuration method for inter-cell measurement reporting according to an embodiment of the present disclosure;
FIG. 4 is a flow chart for a case where a terminal moves between cells according to an embodiment of the present disclosure;
FIG. 5 is another flow chart of a configuration method for inter-cell measurement reporting according to an embodiment of the present disclosure;
FIG. 6 is a schematic structural diagram of a terminal according to an embodiment of the present disclosure;
FIG. 7 is another schematic structural diagram of a terminal according to an embodiment of the present disclosure;
FIG. 8 is a schematic structural diagram of a base station according to an embodiment of the present disclosure; and
FIG. 9 is another schematic structural diagram of a base station according to an embodiment of the present disclosure.

### DETAILED DESCRIPTION

Exemplary embodiments of the present disclosure will be described in more detail below with reference to the accompanying drawings. Although the exemplary embodiments of the present disclosure are illustrated in the accompanying drawings, it should be appreciated that the present disclosure can be implemented in various forms and should not be limited by the embodiments described here. On the contrary, these embodiments are provided in order to have a more thorough understanding of the present disclosure and to fully convey the scope of the present disclosure to those skilled in the art.

Terms "first", "second" and the like in the description and claims of the present disclosure are used to distinguish similar objects, without necessarily describing a specific sequence or order. It should be appreciated that the data used in this way can be interchanged in appropriate cases, so that the embodiments described herein can be implemented in an order other than that illustrated or described here, for example. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment. The term "and/or" as used in the description and claims refers to at least one of objects connected by the term.

The technology described in this specification is not limited to the NR system and long time evolution (Long Time Evolution, LTE) / LTE-Advanced (LTE-Advanced, LTE-A) system, but also can be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) and other systems. Terms "system" and "network" may be often interchangeably used. The CDMA system can implement wireless technologies such as CDMA2000 and universal terrestrial radio access (Universal Terrestrial Radio Access, UTRA). UTRA includes wideband CDMA (Wideband Code Division Multiple Access, WCDMA) and other CDMA variants. The TDMA system can implement wireless technologies such as global system for mobile communication (Global System for Mobile Communication, GSM). OFDMA systems can implement wireless technologies such as ultramobile broadband (UltraMobile Broadband, UMB), Evolution-UTRA (Evolution-UTRA, E-UTRA), IEEE 802.21 (Wi-Fi), IEEE 802.16 (WiMAX), IEEE 802.20, and Flash-OFDM. UTRA and E-UTRA are parts of universal mobile telecommunications system (Universal Mobile Telecommunications System, UMTS). LTE and higher layer LTE (such as LTE-A) are new UMTS versions using E-UTRA. UTRA, E-UTRA, UMTS, LTE, LTE-A, and GSM are described in literature from an organization called "3^{rd} generation partnership project" (3rd Generation Partnership Project, 3GPP). CDMA2000 and UMB are described in literature from an organization called "3^{rd} Generation Partnership Project 2" (3GPP2). The technology described in this specification can be used not only for the systems and radio technologies mentioned above, but also for other systems and radio technologies. Furthermore, the NR system is described in the following description for example purposes, and the NR terminology is used in most of the following description, although these techniques can also be applied to other applications except the NR system applications.

The following description provides examples for, rather than limitations on, the scope, applicability, or configuration set forth in the claims. Changes can be made to the functionality and arrangement of the discussed elements without departing from the spirit and scope of the present disclosure. Various procedures or components can be appropriately omitted, replaced, or added in multiple examples. For example, the described method can be executed in an order that is different from the described order, and various steps can be added, omitted, or combined. In addition, features described with reference to a certain example can be combined in other examples.

Reference is made to FIG. 2, which is a block diagram of a wireless communication system applicable to embodiments of the present disclosure. The wireless communication system includes a terminal 11 and a network device 12. The terminal 11 may be referred to as a user terminal or user equipment (User Equipment, UE). The terminal 11 may be a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), car mounted device, or other terminal side devices. It should be noted that the specific type of the user terminal 11 is not limited in the embodiments of the present disclosure. The network device 12 may be a base station and/or a network element of core network. The above-mentioned base station may be a base station (for example, gNB, 5G NR NB) of 5G and later versions, or a base station in other communication system (such as eNB, WLAN access point, or other access points). The base station may be referred to as node B, evolution node B, access point, base transceiver station (Base Transceiver Station, BTS), radio base station, radio transceiver, basic service set (Basic Service Set, BSS), extended service set (Extended Service Set, ESS), NodeB, evolved NodeB (eNB), home NodeB, home eNB, WLAN access point, WiFi node, or any other appropriate term in the field. The base station is not limited to specific technical vocabulary, as long as the same technical effect can be achieved. It should be noted that, the 5G base station is just taken as an example in the embodiments of the present disclosure, but the specific type of the base station is not limited.

The base station can communicate with the terminal 11 under the control of a controller of the base station. In various examples, the controller of the base station may be a part of the core network or some certain base stations. Some base stations can communicate with the core network for control information or user data through backhaul. In some examples, some of these base stations may communicate with each other directly or indirectly through a backhaul link, which may be a wired or wireless communication link. The wireless communication system can support operations on multiple carriers (waveform signals of different frequencies). A multi-carrier transmitter can simultaneously transmit modulated signals on these multiple carriers. For example, each communication link may be a multi-carrier signal modulated based on various radio technologies. Each modulated signal can be transmitted on different carriers and can carry control information (such as reference signal, control channel, etc.), overhead information, data, etc.

The base station can perform wireless communication with the terminal 11 through one or more access point antennas. Each base station can provide communication coverage for a coverage area corresponding to each base station. The coverage area of an access point may be divided into sectors that only form a part of the coverage area. The wireless communication system may include different types of base stations (such as macro base station, micro base station, or femto base station). The base station can also utilize different radio technologies, such as cellular or WLAN radio access technology. A base station can be associated with the same or different access network(s) or operator deployment(s). The coverage areas of different base stations (including coverage areas of the same or different types of base stations, coverage areas utilizing the same or different radio technologies, or coverage areas belonging to the same or different access networks) can be overlapped.

The communication link in a wireless communication system may include an uplink (UL) for carrying UL transmission (e.g. from the terminal 11 to the network device 12), or a downlink (DL) for carrying DL transmission (e.g. from the network device 12 to the terminal 11). UL transmission may also be referred to as reverse link transmission, while DL transmission may also be referred to as forward link transmission. DL transmission may be performed through an authorized frequency band, an unauthorized frequency band, or both bands. Similarly, UL transmission may be performed through an authorized frequency band, an unauthorized frequency band, or both bands.

As described in the background, the implementation of measurement reporting configuration at the terminal is not flexible enough, and in general, only specific reference signals can be measured. In addition, a mobility of the terminal between cells needs to be done by a cell handover procedure, which involves interaction of a higher-layer (layer-3) signaling. For a terminal moving at a high speed, a delay of the above handover may reduce the quality of data communication and cannot guarantee the reliability of the link.

In order to solve at least one of the above problems, an embodiment of the present disclosure provides a configuration method for inter-cell measurement reporting. By configuring a terminal to measure a reference signal resource of a neighboring cell and to feed back a measurement result, a flexible measurement reporting configuration for the terminal can be realized. In addition, in embodiments of the present disclosure, activation and deactivation of measurements can be implemented in a grouping manner, and an expected arrival time parameter can be configured, which can save the measurement time of the terminal and reduce the power consumption of the terminal. In addition, in the embodiments of the present disclosure, the latency of the cell handover can be reduced.

Referring to FIG. 3, in an embodiment of the present disclosure, a configuration method for inter-cell measurement reporting is provided. The method is performed by a terminal, and includes the following steps.

In step 31, the terminal receives a first signaling transmitted by a base station. Here, the first signaling is used to activate or deactivate a measurement on a target reference signal resource.

In step 32, the terminal performs or cancels a measurement on a target reference signal resource based on the first signaling.

As can be seen from the above, according to the embodiments of the present disclosure, by configuring reference signal resources of a serving cell and a neighboring cell for the terminal, and activating or deactivating the measurement on the target reference signal resource through signaling, a flexible measurement reporting configuration can be realized.

Prior to the step 32, the terminal may also receive report configuration information transmitted by the base station, where the report configuration information is used to configure reference signal resources for a serving cell and a neighboring cell.

The reference signal resource includes one or more of: synchronization signal block (SSB), channel state information reference signal for mobility (CSI-RS for mobility), CSI-RS for tracking (CSI-RS for tracking). In addition, the report configuration information and the first signaling are generally two different configuration signalings. Alternatively, the report configuration information and the first signaling may also be carried in the same signaling or multiple signalings, which is not specifically limited in the present disclosure.

Various implementations of the report configuration information in the step 31 are provided hereinafter.

### First implementation manner

The report configuration information, which may also be referred to as report setting information, includes at least one report setting group. The report setting group includes at least one report setting, the report setting is associated with at least one resource setting, the resource setting includes at least one reference signal resource set, and the reference signal resource set includes at least one reference signal resource; the first signaling includes indication information for at least one target report setting group.

As such, prior to the step 32, the terminal may further determine, based on the first signaling, a target report setting included in the target report setting group and a target resource setting associated with the target report setting, and determine a reference signal resource set included in the target resource setting to obtain the target reference signal resource, and then the terminal may perform or cancel the measurement on the target reference signal resource in the step 32.

### Second implementation manner

The report configuration information includes at least one report setting, where each report setting corresponds to a reporting type. The report setting is associated with at least one resource setting, the resource setting includes at least one reference signal resource set, and the reference signal resource set includes at least one reference signal resource; the first signaling includes indication information for at least one target reporting type. Specifically, the reporting type may include: periodic reporting, semi-persistent reporting, or aperiodic reporting. Alternatively, the reporting type may include: reporting a measurement on a reference signal resource of a serving cell, or reporting a measurement on a reference signal resource of a neighboring cell.

As such, prior to the step 32, the terminal may further determine, based on the first signaling, a target report setting corresponding to the target reporting type and a target resource setting associated with the target report setting, and determine a reference signal resource set included in the target resource setting to obtain the target reference signal resource, and then the terminal may perform or cancel the measurement on the target reference signal resource in the step 32.

### Third implementation manner

The report configuration information includes at least one trigger state, where each trigger state is associated with at least one report setting. The report setting is associated with at least one resource setting, the resource setting includes at least one reference signal resource set, and the reference signal resource set includes at least one reference signal resource; the first signaling includes indication information for at least one target trigger state.

As such, prior to the step 32, the terminal may further determine, based on the first signaling, a target report setting associated with the target trigger state and a target resource setting associated with the target report setting, and determine a reference signal resource set included in the target resource setting to obtain the target reference signal resource, and then the terminal may perform or cancel the measurement on the target reference signal resource in the step 32.

### Fourth implementation manner

The report configuration information includes at least one reference signal resource set, and the reference signal resource set includes at least one reference signal resource; the first signaling includes indication information for at least one target reference signal resource set.

As such, prior to the step 32, the terminal may determine the target reference signal resource set based on the first signaling to obtain the target reference signal resource.

The foregoing provides various implementation manners for report configuration information, and how to determine the target reference signal resource in the various implementation manners.

In an embodiment of the present disclosure, the report setting or the resource setting may be further configured with at least one expected arrival time parameter, where the expected arrival time parameter is used to indicate a difference in arrival time between reference signal resources of the neighboring cell and the serving cell in the report setting or the resource setting. In this way, during the process of performing the measurement on the target reference signal resource in the report setting or the resource setting in the step 32, after a measurement on the target reference signal resource of the serving cell is completed, the terminal may wait for a time indicated by the expected arrival time parameter, and then perform a measurement on the target reference signal resource of the neighboring cell.

By configuring the expected arrival time parameter in the embodiment of the present disclosure, the terminal can accurately determine a measurement occasion for the target reference signal and perform the measurement effectively, thereby saving the measurement time of the terminal and reducing the power consumption of the terminal.

Optionally, according to an embodiment of the present disclosure, the report setting may further include at least one of the following information:
1) indication information for indicating to report measurement values of a first quantity of cells, for example, indicating to report measurement values of three cells;
2) indication information for indicating to report a measurement value that meets a preset threshold, for example, indicate to report a measurement value greater than a threshold of 1;
3) indication information for indicating to report measurement values of a second quantity of preset cells, for example, indicate to report measurement values of four specific cells including cell 1, cell 3, cell 5, and cell 6;
4) indication information for indicating a threshold for triggering the reporting, for example, indicating a threshold of 2. When a measurement value is greater than the threshold of 2, reporting of this measurement value will be triggered.

Optionally, according to an embodiment of the present disclosure, the resource setting may further include at least one cell identifier, and the cell identifier is configured to be corresponding to the reference signal resource set or the reference signal resource. For example, a certain resource setting includes three reference signal resource sets, which are reference signal resource sets 1 to 3. In the resource setting, cell identifiers corresponding to these reference signal resource sets may be configured. It is assumed that the reference signal resource set 1 corresponds to cell 1, the reference signal resource set 2 corresponds to cell 3, and the reference signal resource set 3 corresponds to cell 5, so that the reference resource set that need to be measured for a respective cell can be indicated. For another example, a certain reference signal resource set includes 2 reference signal resources, which are respectively reference signal resources 1 and 2. In the resource setting, cell identifiers corresponding to these reference signal resources may be configured. It is assumed that the reference signal resource 1 corresponds to cell 1 and the reference signal resource 2 corresponds to cell 4, so the reference resource that need to be measured for a respective cell can be indicated.

Considering that the resource setting may include multiple reference signal resource sets, and the reference signal resource set may also include multiple reference signal resources, in order to distinguish the reference signal resources of various different cells, in an embodiment of the present disclosure, reference signal resources in the resource setting may be numbered with resource indexes according to a first rule, and the first rule enables the reference signal resources of various different cells to have different index numbers.

Furthermore, according to an embodiment of the present disclosure, the report setting may further include a report setting for a serving cell and a report setting for a neighboring cell, that is, the serving cell and the neighboring cell have respective report settings.

In an embodiment of the present disclosure, the terminal may further receive a second signaling, and the second signaling is used to activate or deactivate reporting a measurement result by the terminal. In this way, the terminal may report the measurement result of the target reference signal resource, or cancel reporting the measurement result of the target reference signal resource, based on the second signaling. The second signaling and the first signaling may be the same signaling or different signalings.

Furthermore, the terminal may also report the measurement result of the target reference signal resource to the base station based on the report configuration information. For example, the terminal may report a measurement result corresponding to a trigger event and/or a specific measured quantity to the base station, based on a definition of the trigger event for the reporting and/or the specific measured quantity in the report configuration information.

In an embodiment of the present disclosure, in addition to configuring the terminal to perform the measurement, reporting the measurement result by the terminal may be further activated. For example, the terminal may be activated to report the measurement result through the first signaling or another signaling different from the first signaling. The terminal reports a measurement result obtained from a current measurement in accordance with the activation through the first signaling or the other signaling.

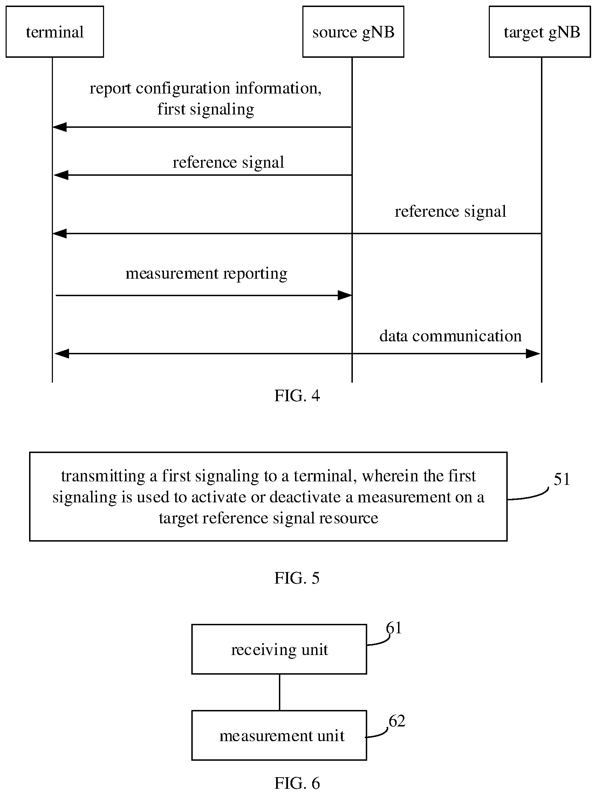

Based on the above configuration method for inter-cell measurement reporting, in the embodiment of the present disclosure, in a cell handover procedure when a synchronization relationship between a source cell and a target cell is satisfied, the terminal may move between the cells according to procedure as shown in FIG. 4, which specifically includes followings.

The terminal receives report configuration information and a first signaling transmitted by a source base station, the report configuration information is used to configure a reference signal resource for a serving cell and that for a neighboring cell, and the first signaling is used to activate or deactivate a measurement on a target reference signal resource; the terminal performs a measurement on the target reference signal resource of the serving cell and a measurement on the target reference signal resource of the neighboring cell based on the first signaling, to obtain a measurement result and then report the same to the source base station. When the source base station determines that a preset handover condition is met based on the measurement result, the source base station selects one of neighboring cells as the target cell, indicates the target cell to serve for the terminal, and indicates the terminal to receive data from the target cell. In this way, the target cell transmits data to the terminal according to the indication of the source cell; the terminal receives service data from the target cell according to the indication of the source cell.

During the procedure of mobility between cells as mentioned above, a cell handover and uplink synchronization processing are simplified, which can reduce the latency for the case where the terminal moves between cells.

Referring to FIG. 5, a configuration method for inter-cell measurement reporting is provided according to an embodiment of the present disclosure. The method is performed by a base station side, and includes step 51.

In step 51, a first signaling is transmitted to a terminal, where the first signaling is used to activate or deactivate a measurement on a target reference signal resource.

Similarly, the report configuration information in the step 51 includes various implementation manners as described below.

### First implementation manner

The report configuration information includes at least one report setting group, where the report setting group includes at least one report setting. The report setting is associated with at least one resource setting, the resource setting includes at least one reference signal resource set, and the reference signal resource set includes at least one reference signal resource; the first signaling includes indication information for at least one target report setting group.

### Second implementation manner

The report configuration information includes at least one report setting, where each report setting corresponds to a reporting type. The report setting is associated with at least one resource setting, the resource setting includes at least one reference signal resource set, and the reference signal resource set includes at least one reference signal resource; the first signaling includes indication information for at least one target reporting type. Specifically, the reporting type may include: periodic reporting, semi-persistent reporting, or aperiodic reporting. Alternatively, the reporting type may include: reporting a measurement on a reference signal resource of a serving cell, or reporting a measurement on a reference signal resource of a neighboring cell.

### Third implementation manner

The report configuration information includes at least one trigger state, where each trigger state is associated with at least one report setting. The report setting is associated with at least one resource setting, the resource setting includes at least one reference signal resource set, and the reference signal resource set includes at least one reference signal resource; the first signaling includes indication information for at least one target trigger state.

### Fourth implementation manner

The report configuration information includes at least one reference signal resource set, and the reference signal resource set includes at least one reference signal resource; the first signaling includes indication information for at least one target reference signal resource set.

Optionally, the report setting or the resource setting may be further configured with at least one expected arrival time parameter, where the expected arrival time parameter is used to indicate a difference in arrival time between reference signal resources of the neighboring cell and the serving cell in the report setting or the resource setting. In the embodiment of the present disclosure, by configuring the expected arrival time parameter, the terminal can accurately determine the time for measuring the target reference signal and perform the measurement effectively, thereby saving the measurement time of the terminal and reducing the power consumption of the terminal.

Optionally, according to an embodiment of the present disclosure, the report setting may further include at least one of the following information:
1) indication information for indicating to report measurement values of a first quantity of cells;
2) indication information for indicating to report a measurement value that meets a preset threshold;
3) indication information for indicating to report measurement values of a second quantity of preset cells;
4) indication information for indicating a threshold for triggering the reporting.

Optionally, according to an embodiment of the present disclosure, the resource setting may further include at least one cell identifier, and the cell identifier is configured to be corresponding to the reference signal resource set or the reference signal resource, such that the reference signal resource set or reference resource that needs to be measured for each of cells can be indicated.

Optionally, according to an embodiment of the present disclosure, the reference signal resources in the resource setting may be numbered with resource indexes according to a first rule, and the first rule enables the reference signal resources of various cells to have different index numbers.

Further, according to an embodiment of the present disclosure, the report setting may further include a report setting for a serving cell and a report setting for a neighboring cell, that is, each of the serving cell and the neighboring cell has a corresponding report setting.

Further, in an embodiment of the present disclosure, the base station may not only configure the terminal to perform the measurement, but also activate or deactivate reporting a measurement result by the terminal. For example, the base station may transmit a second signaling to the terminal, the second signaling is used to activate or deactivate reporting the measurement result by the terminal.

Based on the above configuration method for inter-cell measurement reporting, in the embodiment of the present disclosure, in a cell handover procedure when a synchronization relationship between a source cell and a target cell is satisfied, the terminal may move between the cells according to procedure as shown in FIG. 4, which specifically includes followings.

The terminal receives report configuration information and a first signaling transmitted by a source base station, the report configuration information is used to configure a reference signal resource for a serving cell and that for a neighboring cell, and the first signaling is used to activate or deactivate a measurement on a target reference signal resource; the terminal performs a measurement on the target reference signal resource of the serving cell and a measurement on the target reference signal resource of the neighboring cell based on the first signaling, to obtain a measurement result and then report the same to the source base station. When the source base station determines that a preset handover condition is met based on the measurement result, the source base station selects one of neighboring cells as the target cell, indicates the target cell to serve for the terminal, and indicates the terminal to receive data from the target cell. In this way, the target cell transmits data to the terminal according to the indication of the source cell; the terminal receives service data from the target cell according to the indication of the source cell.

For a better understanding of the embodiments, various examples are provided below to further explain the present disclosure.

### Example 1:

A base station configures N=5 report configurations, also called report settings (ReportSetting) for a terminal, denoted by ReportSetting0, ReportSetting 1, ..., and ReportSetting4. Meanwhile, the base station configures a report setting group 0 including {ReportSetting0, ReportSetting1}, and a report setting group 1 including {ReportSetting2, ReportSetting3, ReportSetting4}. Reporting types of the N=5 report settings are all aperiodic reporting. Each report setting is associated with a resource setting (ResourceSetting). For example, ReportSetting3 is associated with ResourceSetting3. ResourceSetting0 includes a resource set, which includes S=4 SSBs of a serving cell. ResourceSetting 1 includes a resource set, which includes S=4 CSI-RS resources for mobility of the serving cell. ResourceSetting2 includes three resource sets, and each of the resource sets is corresponding to a neighboring cell, and includes multiple reference signal resources for this neighboring cell. For example, resource set0 includes 6 SSBs for neighboring cell 1, resource set1 includes 8 SSBs for neighboring cell 2, and resource set2 includes 4 SSBs for neighboring cell 3. Similarly, each of ReportSetting3 and ReportSetting4 also includes multiple reference signal resources for neighboring cells.

The base station indicates activation and deactivation of a report setting group through MAC-CE (first signaling), and the MAC-CE includes a report setting group ID and an activation/deactivation flag bit. If the report setting group ID=0 and the flag bit is set to 1, it indicates that the terminal starts measuring reference signal resources in the report setting group 0. That is, the terminal starts measuring 4 SSBs of the serving cell corresponding to ResourceSetting0 and 4 CSI-RS resources for mobility of the serving cell corresponding to ResourceSetting1. If the report setting group ID=0 and the flag bit is set to 0, it indicates that the terminal stops measuring the reference signal resources in the report setting group 0. Similarly, if the report setting group ID=1 and the flag bit is set to 1, the terminal starts measuring reference signal resources corresponding to ResourceSetting2/3/4, for example, the terminal starts measuring 6 SSBs of neighboring cell 1, 8 SSBs of neighboring cell 2, and 4 SSBs of neighboring cell 3, which correspond to ResourceSetting2.

Furthermore, during the active period of the measurement, the base station triggers the aperiodic measurement reporting for the report setting through another signaling, such as downlink control information (Downlink Control Information, DCI). For example, during the activation period of report setting group 0, the base station may trigger reporting of ReportSetting0 and/or ReportSetting1 through DCI. Alternatively, during the activation period of report setting group 1, the base station may trigger reporting of ReportSetting2, ReportSetting3 and ReportSetting4 through DCI.

For each ReportSetting, the base station may configure a reporting criterion. For example, a RSRP report threshold is set for ReportSetting2, and at most one RSRP value can be reported for each cell. In this way, the terminal may report a maximum of 3 RSRP values, with each value corresponds to one neighboring cell md meets the requirement on the report threshold.

In addition, the base station may also configure an arrival time parameter for a neighboring cell. For example, an arrival time parameter is configured for each Resource set in ResourceSetting2. For example, an arrival time parameter of Resource set0 is T0, which represents a time difference between an arrival time of a reference signal of neighboring cell 1 and an arrival time of a reference signal of the serving cell. In this way, after the reference signal of the serving cell has been measured, the terminal waits for T0 time before measuring the reference signal of neighboring cell 1.

In addition, for ResourceSetting that includes reference signal resources for multiple cells, reference signals of different cells may be distinguished by cell IDs. For example, Resource set0 in ResouceSetting2 is configured with PCI=1, which means that reference signals included in this set are SSBs of neighboring cell 1. Similarly, Resource set1 is configured with PCI=2, which indicates that reference signals included in this set are SSBs of neighboring cell 2. Alternatively, a global resource numbering manner may be used to distinguish the reference signals of different cells. For example, a first rule is defined, with resources being indexed in the order of cell IDs. The first rule is for example defined as: PCI * N_res + n, where PCI represents cell ID number, N_ Res represents the maximum number of reference signal resources per cell, and n represents the reference signal resources of the cell indicated by PCI, n = 0, 1,... N_res - 1.

It is assumed that N_res = 8. As configured above, four SSBs in resource setting0 are sequentially numbered as 0, 1, 2, and 3. In this way, in resource setting2, six SSBs in resource set0 are sequentially numbered as 8, 9, 10, 11, 12, and 13; eight SSBs in resource set1 are sequentially numbered as 16, 17, ..., 23; four SSBs in resource set2 are sequentially numbered as 24, 25, 26, 27.

### Example 2:

A base station configures N=5 report settings for a terminal, represented as ReportSetting0, ReportSetting1, ..., and ReportSetting4. Reporting types of the N=5 report settings are as follows: the reporting type of ReportSetting0 is periodic reporting, reporting types of ReportSetting1 and ReportSetting2 are semi-persistent reporting, and reporting types of ReportSetting3 and ReportSetting4 are aperiodic reporting. Each of the report settings is associated with one resource setting, for example, ReportSetting3 is associated with ResourceSetting3. ResourceSetting0 contains one resource set, which includes S=4 SSBs of the serving cell. ResourceSetting1 contains one resource set, which includes S=4 CSI-RS resources for mobility of the serving cell. ResourceSetting2 contains three resource sets, and each of the resource sets is corresponding to a neighboring cell, and contains multiple reference signal resources for this neighboring cell. For example, resource set0 contains six SSBs for neighboring cell 1, resource set1 contains eight SSBs for neighboring cell 2, and resource set2 contains four SSBs for neighboring cell 3. Similarly, ReportSetting3 and ReportSetting4 also contain multiple reference signal resources for neighboring cells.

The base station indicates activation and deactivation of different types of report settings by using a MAC-CE signaling. The MAC-CE includes a reporting type indication and an activation/deactivation flag bit. If the reporting type indication of the MAC-CE is semi-persistent reporting and the flag bit is set to 1, it indicates that the terminal starts measuring reference signal resources of ReportSetting1 and ReportSetting2. That is, the terminal starts measuring four CSI-RS resources for mobility of the serving cell corresponding to ResourceSetting1 and 18 SSBs included in ResourceSetting2. Similarly, if the reporting type indication of the MAC-CE is the aperiodic reporting, and the flag bit is set to 1, the terminal starts measuring reference signal resources corresponding to ResourceSetting3/4. Further, the MAC-CE may also simultaneously activate the semi-persistent report settings, that is, simultaneously activating measurement result reporting of both ReportSetting1 and ReportSetting2. After the MAC-CE is received and an offset value is elapsed, a semi-persistent reporting may be performed.

Alternatively, the MAC-CE includes an indication for a serving cell or a neighboring cell, and an activation and deactivation flag bit. If the MAC-CE indicates the serving cell and the flag bit is 1, the terminal starts measuring reference signal resources of the serving cell, namely ResourceSetting0 and ResourceSetting1. If MAC-CE indicates the neighboring cell(s) and the flag bit is 1, the terminal starts measuring reference signal resources of the neighboring cell(s).

Furthermore, the MAC-CE may include both an indication of a reporting type including periodic/semi-persistent/aperiodic type, and an indication for a serving cell or a neighboring cell.

The remaining descriptions similar to Example 1 is not repeated herein.

### Example 3:

A base station configures M=2 trigger states (TriggerState) for a terminal. TriggerStateO is associated with three report settings, represented as ReportSetting0, ReportSetting1, and ReportSetting2. TriggerStatel is associated with two report settings, represented as ReportSetting3 and ReportSetting4. Reporting types of N=5 report settings are all aperiodic reporting. Each report setting is associated with a resource setting, for example, ReportSetting3 is associated with ResourceSetting3. ResourceSetting0 includes a resource set, which includes S=4 SSBs of a serving cell. ResourceSetting1 includes a resource set, which includes S=4 CSI-RS resources for mobility of the serving cell. ResourceSetting2 includes three resource sets, and each of the resource sets is corresponding to a neighboring cell, and includes multiple reference signal resources for this neighboring cell. For example, resource set0 includes 6 SSBs for neighboring cell 1, resource set1 includes 8 SSBs for neighboring cell 2, and resource set2 includes 4 SSBs for neighboring cell 3. Similarly, each of ReportSetting3 and ReportSetting4 also includes multiple reference signal resources for a neighboring cell.

The base station indicates activation and deactivation of a report setting corresponding to one or more TriggerStates by using a MAC-CE signaling. If TriggerStateO is indicated in the MAC-CE and the flag bit is set to 1, it indicates that the terminal starts measuring reference signal resources of ReportSetting0, ReportSetting1, and ReportSetting2. That is, the terminal starts measuring four SSBs of the serving cell corresponding to ResourceSetting0, four CSI-RS resources for mobility of the serving cell corresponding to ResourceSetting1, and 18 SSBs contained in ResourceSetting2. Similarly, if TriggerStatel is indicated in the MAC-CE and the flag bit is set to 1, the terminal starts measuring reference signal resources corresponding to ResourceSetting3/4.

The remaining descriptions similar to Example 1 is not repeated herein.

### Example 4:

A base station configures M=16 reference signal resources for a terminal, and two reference signal resource sets, where a reference signal resource set 0 includes reference signal resources 0 to 7 and a reference signal resource set 1 includes reference signal resources 8 to 15. Reference signal resources may be grouped based on reference signal resources of a serving cell, reference signal resources of a neighboring cell, SSB, and CSI-RS for mobility. For example, reference signal resource set 0 includes 8 SSBs of the serving cell, and reference signal resource set 1 includes 8 SSBs of the neighboring cell(s). The base station indicates activation and deactivation of different reference signal resource sets by using a MAC-CE signaling. The MAC-CE includes an indication of reference signal resource set and an activation/deactivation flag bit.

If the indication of reference signal resource set of MAC-CE is the resource set 0 and the flag bit is set to 1, it indicates that the terminal starts measuring reference signal resources 0 to 7. If the indication of reference signal resource set of MAC-CE is resource set 0 and the flag bit is set to 0, it indicates that the terminal stops measuring reference signal resources 0 to 7.

### Example 5:

In the above Examples 1-4, the base station activates and deactivates the reference signal measurement by transmitting two MAC-CEs. For example, when the flag bit in the MAC-CE is set to 1, it indicates the reference signal measurement is activated; when the flag bit in the MAC-CE is set to 0, it indicates that the reference signal measurement is deactivated.

Another manner is to configure a timer (Timer) by the base station. A time duration of the timer is configured by the base station. After the base station has activated the reference signal measurement through MAC-CE, the timer is activated. After the time duration indicated by the Timer expires, the UE automatically deactivates the reference signal measurement. In such way, the base station does not need to transmit another MAC-CE to indicate a deactivation of the reference signal measurement.

The timer may also be a time window configured by the base station, and the base station configures the length of the time window and offset value (offset) of the measurement window relative to the starting time. When the MAC-CE activates the reference signal measurement, after the time indicated by the offset is elapsed, the terminal starts measuring the reference signal until the time window expires.

Based on the above methods, with the embodiments of the present disclosure the delay of cell handover can be reduced by configuring the terminal to measure the reference signal of the neighboring cell and to feed back the measurement result. Furthermore, with the embodiments of the present disclosure, activation and deactivation of measurements can be implemented in a grouping manner, and an expected arrival time parameter can be configured, which can save the measurement time of the terminal and reduce the power consumption of the terminal.

The above introduces various methods in the embodiments of the present disclosure. The device for implementing the above methods will be further provided below.

Referring to FIG. 6, an embodiment of the present disclosure provides a terminal, which includes: a receiving unit 61, configured to receive a first signaling transmitted by a base station; and a measurement unit 62, configured to perform or cancel a measurement on a target reference signal resource based on the first signaling.

Optionally, the receiving unit 61 is further configured to receive report configuration information transmitted by the base station, where the report configuration information is used to configure reference signal resources for a serving cell and a neighboring cell.

Optionally, the report configuration information includes at least one report setting group, where the report setting group includes at least one report setting, the report setting is associated with at least one resource setting, the resource setting includes at least one reference signal resource set, and the reference signal resource set includes at least one reference signal resource; the first signaling includes indication information for at least one target report setting group. The measurement unit 62 is further configured for: before performing or cancelling the measurement on the target reference signal resource based on the first signaling, determining, based on the first signaling, a target report setting included in the target report setting group and a target resource setting associated with the target report setting, and determining a reference signal resource set included in the target resource setting to obtain the target reference signal resource.

Optionally, the report configuration information includes at least one report setting, where each report setting corresponds to a reporting type; the report setting is associated with at least one resource setting, the resource setting includes at least one reference signal resource set, and the reference signal resource set includes at least one reference signal resource; the first signaling includes indication information for at least one target reporting type. The measurement unit 62 is further configured for: before performing or cancelling the measurement on the target reference signal resource based on the first signaling, determining, based on the first signaling, a target report setting corresponding to the target reporting type and a target resource setting associated with the target report setting, and determining a reference signal resource set included in the target resource setting to obtain the target reference signal resource.

The reporting type includes: periodic reporting, semi-persistent reporting, or aperiodic reporting; or, the reporting type includes: performing a measurement on the reference signal resource of the serving cell and reporting a corresponding measurement result, or performing a measurement on the reference signal resource of the neighboring cell and reporting a corresponding measurement result.

Optionally, the report configuration information includes at least one trigger state, where each trigger state is associated with at least one report setting; the report setting is associated with at least one resource setting, the resource setting includes at least one reference signal resource set, and the reference signal resource set includes at least one reference signal resource; the first signaling includes indication information for at least one target trigger state. The measurement unit 62 is further configured for: before performing or cancelling the measurement on the target reference signal resource based on the first signaling, determining, based on the first signaling, a target report setting associated with the target trigger state and a target resource setting associated with the target report setting, and determining a reference signal resource set included in the target resource setting to obtain the target reference signal resource.

Optionally, the report configuration information includes at least one reference signal resource set, and the reference signal resource set includes at least one reference signal resource; the first signaling includes indication information for at least one target reference signal resource set. The measurement unit 62 is further configured for: before performing or cancelling the measurement on the target reference signal resource based on the first signaling, determining the target reference signal resource set based on the first signaling to obtain the target reference signal resource.

Optionally, the report setting or the resource setting is configured with at least one expected arrival time parameter, where the expected arrival time parameter is used to indicate a difference between an arrival time of the reference signal resource of the neighboring cell and an arrival time of the reference signal resource of the serving cell in the report setting or the resource setting.

Optionally, the measurement unit is further configured for: during the process of performing the measurement on the target reference signal resource in the report setting or the resource setting, after a measurement on the target reference signal resource of the serving cell is done, waiting for a time indicated by the expected arrival time parameter, and then performing a measurement on the target reference signal resource of the neighboring cell.

Optionally, the report setting includes at least one of following information:
indication information for indicating to report measurement values of a first quantity of cells;
indication information for indicating to report a measurement value that meets a preset threshold;
indication information for indicating to report measurement values of a second quantity of preset cells;
indication information for indicating a threshold for triggering the reporting.

Optionally, the resource setting also includes at least one cell identifier, and the cell identifier is configured to be corresponding to a reference signal resource set or reference signal resource.

Optionally, each of reference signal resources in the resource setting is numbered with a resource index according to a first rule, and in each cell, an index number of a reference signal resource is different from an index number of another reference signal resource.

Optionally, the report setting includes a report setting for the serving cell and a report setting for the neighboring cell.

Optionally, the receiving unit is further configured to receive a second signaling, and the second signaling is further used to activate or deactivate reporting a measurement result by the terminal. The terminal further includes a reporting unit, configured to report the measurement result of the target reference signal resource, or cancel reporting the measurement result of the target reference signal resource, based on the second signaling.

Optionally, the reference signal resource includes one or more of: synchronization signal block (SSB), channel state information reference signal (CSI-RS) for mobility, or CSI-RS for tracking.

It should be noted that the device in this embodiment corresponds to the method shown in FIG. 3, and implementation manners in multiple embodiments are applicable to the embodiments of the device, which can also achieve the same technical effect. The above device provided in the embodiments of the present disclosure can achieve all the method steps implemented in the above method embodiments, and can achieve the same technical effect. Therefore, the parts and beneficial effects of this embedment that are the same as the method embodiments will not be further elaborated in detail.

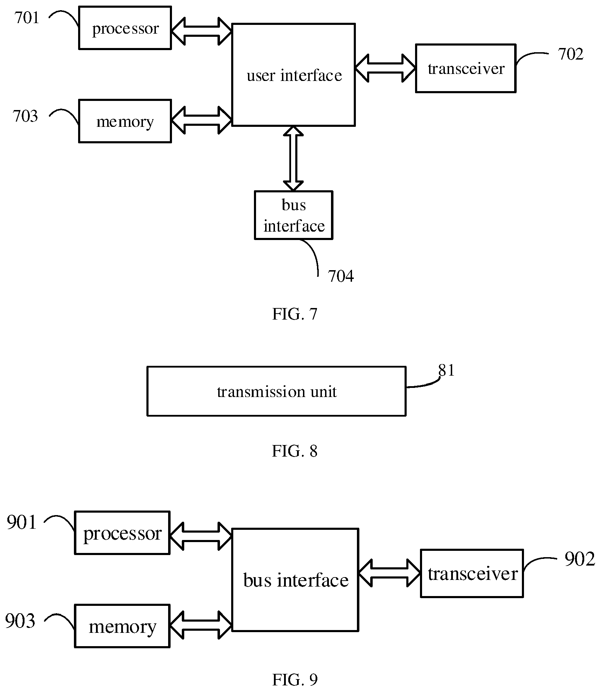

Reference is made to FIG. 7, which is a schematic structural diagram of a terminal provided in an embodiment of the present disclosure. The terminal includes: a processor 701, a transceiver 702, a memory 703, a user interface 704 and a bus interface.

In an embodiment of the present disclosure, the terminal further includes a program stored in memory 703 and capable of running on processor 701.

The transceiver 702 is configured to transmit and receive data under the control of the processor.

The processor 701 is configured to read the computer program in the memory to perform the following operations: receiving a first signaling transmitted by a base station; and performing or cancelling a measurement on a target reference signal resource based on the first signaling.

Optionally, the processor is further configured to read the computer program in the memory to perform the following operations: receiving report configuration information transmitted by the base station, where the report configuration information is used to configure reference signal resources for a serving cell and a neighboring cell.

Optionally, the report configuration information includes at least one report setting group, where the report setting group includes at least one report setting, the report setting is associated with at least one resource setting, the resource setting includes at least one reference signal resource set, and the reference signal resource set includes at least one reference signal resource; the first signaling includes indication information for at least one target report setting group. The processor is further configured to read the computer program in the memory to perform the following operations:
before performing or cancelling the measurement on the target reference signal resource based on the first signaling, determining, based on the first signaling, a target report setting included in the target report setting group and a target resource setting associated with the target report setting, and determining a reference signal resource set included in the target resource setting to obtain the target reference signal resource.

Optionally, the report configuration information includes at least one report setting, where each report setting corresponds to a reporting type; the report setting is associated with at least one resource setting, the resource setting includes at least one reference signal resource set, and the reference signal resource set includes at least one reference signal resource; the first signaling includes indication information for at least one target reporting type. The processor is further configured to read the computer program in the memory to perform the following operations:
before performing or cancelling the measurement on the target reference signal resource based on the first signaling, determining, based on the first signaling, a target report setting corresponding to the target reporting type and a target resource setting associated with the target report setting, and determining a reference signal resource set included in the target resource setting to obtain the target reference signal resource.

Optionally, the reporting type includes: periodic reporting, semi-persistent reporting, or aperiodic reporting; or, the reporting type includes: performing a measurement on the reference signal resource of the serving cell and a corresponding reporting for the measurement, or performing a measurement on the reference signal resource of the neighboring cell and a corresponding reporting for the measurement.

Optionally, the report configuration information includes at least one trigger state, where each trigger state is associated with at least one report setting; the report setting is associated with at least one resource setting, the resource setting includes at least one reference signal resource set, and the reference signal resource set includes at least one reference signal resource; the first signaling includes indication information for at least one target trigger state. The processor is further configured to read the computer program in the memory to perform the following operations:
before performing or cancelling the measurement on the target reference signal resource based on the first signaling, determining, based on the first signaling, a target report setting associated with the target trigger state and a target resource setting associated with the target report setting, and determining a reference signal resource set included in the target resource setting to obtain the target reference signal resource.

Optionally, the report configuration information includes at least one reference signal resource set, and the reference signal resource set includes at least one reference signal resource; the first signaling includes indication information for at least one target reference signal resource set. The processor is further configured to read the computer program in the memory to perform the following operations:
before performing or cancelling the measurement on the target reference signal resource based on the first signaling, determining the target reference signal resource set based on the first signaling to obtain the target reference signal resource.

Optionally, the report setting or the resource setting is configured with at least one expected arrival time parameter, where the expected arrival time parameter is used to indicate a difference between an arrival time of the reference signal resource of the neighboring cell and an arrival time of the reference signal resource of the serving cell in the report setting or the resource setting.

Optionally, the processor is further configured to read the computer program in the memory to perform the following operations: during the process of performing the measurement on the target reference signal resource in the report setting or the resource setting, after a measurement on the target reference signal resource of the serving cell has been done, waiting for a time indicated by the expected arrival time parameter, and then performing a measurement on the target reference signal resource of the neighboring cell.

Optionally, the report setting includes at least one of following information:
indication information for indicating to report measurement values of a first quantity of cells;
indication information for indicating to report a measurement value that meets a preset threshold;
indication information for indicating to report measurement values of a second quantity of preset cells;
indication information for indicating a threshold for triggering the reporting.

Optionally, the resource setting further includes at least one cell identifier, and the cell identifier is configured to be corresponding to the reference signal resource set or the reference signal resource.

Optionally, each of reference signal resources in the resource setting is numbered with a resource index according to a first rule, and in each cell, an index number of a reference signal resource is different from an index number of another reference signal resource.

Optionally, the report setting includes a report setting for the serving cell and a report setting for the neighboring cell.

Optionally, the processor is further configured to read the computer program in the memory to perform the following operations:
receiving a second signaling, the second signaling being used to activate or deactivate reporting a measurement result by the terminal; and
reporting the measurement result of the target reference signal resource, or cancelling reporting of the measurement result of the target reference signal resource, based on the second signaling.

Optionally, the reference signal resource includes one or more of: synchronization signal block (SSB), channel state information reference signal (CSI-RS) for mobility, or CSI-RS for tracking.

It is noted that in the embodiments of the present disclosure, the computer program can be executed by the processor 701 to achieve the various processes of the method embodiments as shown in FIG. 3, and achieve the same technical effect, which will not be repeated herein to avoid repetition.

In FIG. 7, a bus architecture may include any quantity of interconnected buses and bridges, and connects various circuits including one or more processors represented by the processor 701 and memory represented by the memory 703. The bus architecture may also connect various other circuits such as peripherals, voltage regulators and power management circuits, which is well known in the art. Therefore, a detailed description thereof is omitted herein. A bus interface provides an interface. The transceiver 702 may be multiple elements, i.e., a transmitter and a receiver, to allow for communication with various other apparatuses on the transmission medium. The transmission medium includes wireless channel, wired channel, optic fiber or the like. For different user equipment, the user interface 704 may be an interface capable of externally or internally connecting a required device, and the connected device includes, but is not limited to: a keypad, a display, a speaker, a microphone, a joystick and the like.

The processor 701 is responsible for supervising the bus architecture and normal operation and the memory 703 may store the data being used by the processor 701 during operation.

It should be noted that the device in this embodiment corresponds to the method shown in FIG. 3 above, and implementation manners in various embodiments are applicable to the embodiment of the device, which may also achieve the same technical effect. In this device, the transceiver 702 and the memory 703, or the transceiver 702 and the processor 701 may be communicatively connected through bus interface. The functions of processor 701 may also be implemented by transceiver 702, and the functions of transceiver 702 may also be implemented by processor 701. It should be noted that the above device provided in the embodiments of the present disclosure can achieve all steps of the method implemented in the above method embodiments, and can achieve the same technical effects. Therefore, the parts and beneficial effects of this embedment that are the same as the method embodiments will not be described therein in detail.

In some embodiments of the present disclosure, a computer-readable storage medium is also provided, on which a program is stored. The program is executed by the processor to implement the following steps:
receiving a first signaling transmitted by a base station; and
performing or cancelling a measurement on a target reference signal resource based on the first signaling.

When the program is executed by the processor, all the implementation manners in the configuration method for inter-cell measurement reporting applied to the terminal side can be realized, and the same technical effect may be achieved, which will not be described herein to avoid repetition.

An embodiment of the present disclosure provides a base station as shown in FIG. 8, which includes: a transmission unit 81 configured to transmit a first signaling to a terminal, where the first signaling is used to activate or deactivate a measurement on a target reference signal resource.

Optionally, the transmission unit is further configured to transmit report configuration information to the terminal, where the report configuration information is used to configure reference signal resources for a serving cell and a neighboring cell.

Optionally, the report configuration information includes at least one report setting group, where the report setting group includes at least one report setting, the report setting is associated with at least one resource setting, the resource setting includes at least one reference signal resource set, and the reference signal resource set includes at least one reference signal resource; the first signaling includes indication information for at least one target report setting group.

Optionally, the report configuration information includes at least one report setting, where each report setting corresponds to a reporting type; the report setting is associated with at least one resource setting, the resource setting includes at least one reference signal resource set, and the reference signal resource set includes at least one reference signal resource; the first signaling includes indication information for at least one target reporting type.

Optionally, the reporting type includes: periodic reporting, semi-persistent reporting, or aperiodic reporting; or, the reporting type includes: performing a measurement on the reference signal resource of the serving cell and a reporting for the measurement, or performing a measurement on the reference signal resource of the neighboring cell and a reporting for the measurement.

Optionally, the report configuration information includes at least one trigger state, where each trigger state is associated with at least one report setting; the report setting is associated with at least one resource setting, the resource setting includes at least one reference signal resource set, and the reference signal resource set includes at least one reference signal resource; the first signaling includes indication information for at least one target trigger state.

Optionally, the report configuration information includes at least one reference signal resource set, and the reference signal resource set includes at least one reference signal resource; the first signaling includes indication information for at least one target reference signal resource set.

Optionally, the report setting or the resource setting is configured with at least one expected arrival time parameter, where the expected arrival time parameter is used to indicate a difference between an arrival time of the reference signal resource of the neighboring cell and an arrival time of the reference signal resource of the serving cell in the report setting or the resource setting.

Optionally, the report setting includes at least one of following information:
indication information for indicating to report measurement values of a first quantity of cells;
indication information for indicating to report a measurement value that meets a preset threshold;
indication information for indicating to report measurement values of a second quantity of preset cells;
indication information for indicating a threshold for triggering the reporting.

Optionally, the resource setting further includes at least one cell identifier, and the cell identifier is configured to be corresponding to the reference signal resource set or the reference signal resource.

Optionally, each reference signal resource in the resource setting is numbered with a resource index according to a first rule, and reference signal resources of respective cells have different index numbers.

Optionally, the report setting includes a report setting for the serving cell and a report setting for the neighboring cell.

Optionally, the transmission unit is configured to transmit a second signaling to the terminal, the second signaling being used to activate or deactivate reporting a measurement result by the terminal.

Optionally, the reference signal resource includes one or more of: synchronization signal block (SSB), channel state information reference signal (CSI-RS) for mobility, or CSI-RS for tracking.

It should be noted that the device in this embodiment is a device corresponding to the method shown in FIG. 5. The implementation manners in multiple embodiment are applicable to the embodiments of the device, which can also achieve the same technical effect. It should be noted that the above device provided in the embodiments of the present disclosure can achieve all the method steps implemented in the above method embodiments, and can achieve the same technical effect. Therefore, the parts and beneficial effects of this embedment that are the same as the method embodiments will not be further described in detail.

Reference is made to FIG. 9, which is a schematic structural diagram of a base station provided in an embodiment of the present disclosure. The base station includes: a processor 901, a transceiver 902, a memory 903 and a bus interface.

In an embodiment of the present disclosure, the base station further includes a program stored in memory 903 and capable of running on processor 901.

The transceiver 1102 is configured to transmit and receive data under the control of the processor.

The processor 1101 is configured to read the computer program in the memory to perform the following operations: transmitting a first signaling to a terminal, where the first signaling is used to activate or deactivate a measurement on a target reference signal resource.

Optionally, the processor 1101 is further used to read the computer program in the memory to perform the following operations: transmitting report configuration information to the terminal, where the report configuration information is used to configure reference signal resources for a serving cell and a neighboring cell.

Optionally, the report configuration information includes at least one report setting group, where the report setting group includes at least one report setting, the report setting is associated with at least one resource setting, the resource setting includes at least one reference signal resource set, and the reference signal resource set includes at least one reference signal resource; the first signaling includes indication information for at least one target report setting group.

Optionally, the report configuration information includes at least one report setting, where each report setting corresponds to a reporting type; the report setting is associated with at least one resource setting, the resource setting includes at least one reference signal resource set, and the reference signal resource set includes at least one reference signal resource; the first signaling includes indication information for at least one target reporting type.

Optionally, the reporting type includes: periodic reporting, semi-persistent reporting, or aperiodic reporting; or, the reporting type includes: performing a measurement on the reference signal resource of the serving cell and a reporting for the measurement, or performing a measurement on the reference signal resource of the neighboring cell and a reporting for the measurement.

Optionally, the report configuration information includes at least one trigger state, where each trigger state is associated with at least one report setting; the report setting is associated with at least one resource setting, the resource setting includes at least one reference signal resource set, and the reference signal resource set includes at least one reference signal resource; the first signaling includes indication information for at least one target trigger state.

Optionally, the report configuration information includes at least one reference signal resource set, and the reference signal resource set includes at least one reference signal resource; the first signaling includes indication information for at least one target reference signal resource set.

Optionally, the report setting or the resource setting is configured with at least one expected arrival time parameter, where the expected arrival time parameter is used to indicate a difference between an arrival time of the reference signal resource of the neighboring cell and an arrival time of the reference signal resource of the serving cell in the report setting or the resource setting.

Optionally, the report setting includes at least one of following information:
indication information for indicating to report measurement values of a first quantity of cells;
indication information for indicating to report a measurement value that meets a preset threshold;
indication information for indicating to report measurement values of a second quantity of preset cells;
indication information for indicating a threshold for triggering the reporting.

Optionally, the resource setting further includes at least one cell identifier, and the cell identifier is configured to be corresponding to the reference signal resource set or the reference signal resource.

Optionally, each of reference signal resources in the resource setting is numbered with a resource index according to a first rule, and reference signal resources of respective cells have different index numbers.

Optionally, the report setting includes a report setting for the serving cell and a report setting for the neighboring cell.

Optionally, the processor is further used to read the computer program in the memory to perform the following operations: transmitting a second signaling to the terminal, the second signaling being used to activate or deactivate reporting a measurement result by the terminal.

Optionally, the reference signal resource includes one or more of: synchronization signal block (SSB), channel state information reference signal (CSI-RS) for mobility, or CSI-RS for tracking.

It is noted that in the embodiments of the present disclosure, when the computer program is executed by the processor 901, various processes of the method embodiments shown in FIG. 5 can be implemented, thereby achieving the same technical effect, which will not be described herein to avoid repetition.

In FIG. 9, a bus architecture may include any quantity of interconnected buses and bridges, and connects various circuits including one or more processors represented by the processor 901 and memory represented by the memory 903. The bus architecture may also connect various other circuits such as peripherals, voltage regulators and power management circuits, which is well known in the art. Therefore, a detailed description thereof is omitted herein. A bus interface provides an interface. The transceiver 902 may be multiple elements, i.e., a transmitter and a receiver, to allow for communication with various other apparatuses on the transmission medium.

The processor 901 is responsible for supervising the bus architecture and normal operation and the memory 903 may store the data being used by the processor 901 during operation.

It should be noted that the base station in this embodiment is a device corresponding to the method shown in FIG. 5. The implementation manners in each of the above embodiments are applicable to the embodiments of the base station, which can also achieve the same technical effect. In this device, the transceiver 902 and the memory 903, or the transceiver 902 and the processor 901 can be communicatively connected through a bus interface. The functions of processor 901 can also be implemented by transceiver 902, and the functions of transceiver 902 can also be implemented by processor 901. It should be noted that the above device provided in the embodiments of the present disclosure can achieve all the method steps implemented in the above method embodiments, and can achieve the same technical effect. Therefore, the parts and beneficial effects of this embedment that are the same as the method embodiments will not be further described in detail.

In some embodiments of the present disclosure, a computer-readable storage medium is further provided, on which a program is stored. The program is executed by the processor to implement the following steps: transmitting a first signaling to a terminal, where the first signaling is used to activate or deactivate a measurement on a target reference signal resource.

When the program is executed by the processor all the implementation manners in the configuration method for inter-cell measurement reporting applied to the base station can be implement, and the same technical effect may be achieved, which will not be described herein to avoid repetition.

Those skilled in the art will appreciate that the units and the algorithm steps described in conjunction with the embodiments according to the present disclosure may be implemented in the form of electronic hardware or a combination of computer software and electronic hardware. Whether these functions are performed in hardware or in software depends on the specific application and design constraints of the technical solution. Those skilled in the art may use different methods to implement the described functions for each particular application, and such implementations are not to be considered as departing from the scope of the present disclosure.

Those skilled in the art can clearly understand that, for the sake of easiness and conciseness of description, reference can be made to the corresponding processes in the foregoing method embodiments for specific operating processes of the systems, the devices and the units described above, and a repeated description thereof is omitted herein.

It should be understood that in the embodiments according to the present disclosure, the disclosed device and method may be implemented in other ways. For example, the described embodiments directed to the device are merely exemplary. For example, the units are divided merely in logical function, which may be divided in another way in actual implementation, e.g., multiple units or components may be combined or integrated into another device, or some features may be ignored or not performed. In addition, the disclosed or discussed mutual coupling or direct coupling or communication connection may be an indirect coupling or communication connection through some interfaces, devices or units, which may be implemented in electronic, mechanical or other forms.

The units described as separate components may or may not be physically separated, and the components shown as units may or may not be physical units, that is, they may be located in one place or distributed over multiple network units. Some or all of the units may be selected according to practical needs to achieve the object of the technical solutions of the embodiments of the present disclosure.

In addition, functional units in various embodiments of the present disclosure may be integrated into one processing unit, or may be physically independent, or two or more units may be integrated into one unit.

If the function is implemented in the form of a software functional unit, and sold or used as a standalone product, it may be stored in a computer readable storage medium. Based on this understanding, essence of the technical solution of the present disclosure, or the part contributing to the related technologies, or part of the technical solution, may be embodied in the form of a software product. The computer software product is stored in a storage medium, and the software product includes a number of instructions to enable a computer device (which may be a personal computer, a server, or a network device, etc.) to perform all or part of the steps of method described in the various embodiments of the present disclosure. The storage medium includes a USB flash disk, a mobile hard disk, a ROM, a RAM, a magnetic disk, an optical disk, and other medium which can store program code.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above - device in the form of program code, and a certain processing element of the above device may call and execute the functions of the determination. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

The above descriptions merely illustrate specific implementations of the present disclosure, and the protection scope of the present disclosure is not limited thereto. Any modification or substitution made by those skilled in the art without departing from the technical scope of the present disclosure shall fall within the protection scope of the present disclosure. Therefore, the protection scope of the present disclosure shall be determined by the protection scope of the claims.

## Claims

1. A configuration method for inter-cell measurement reporting, comprising:
receiving, by a terminal, a first signaling transmitted by a base station; and
performing or cancelling, by the terminal, a measurement on a target reference signal resource based on the first signaling.

2. The method according to claim 1, wherein before performing or cancelling the measurement on the target reference signal resource based on the first signaling, the method further comprises:
receiving, by the terminal, report configuration information transmitted by the base station, wherein the report configuration information is used to configure reference signal resources of a serving cell and a neighboring cell.

3. The method according to claim 2, wherein the report configuration information comprises at least one report setting group, wherein the report setting group comprises at least one report setting, the report setting is associated with at least one resource setting, the resource setting comprises at least one reference signal resource set, and the reference signal resource set comprises at least one reference signal resource; the first signaling comprises indication information for at least one target report setting group;
before performing or cancelling the measurement on the target reference signal resource based on the first signaling, the method further comprises:
determining, based on the first signaling, a target report setting comprised in the target report setting group and a target resource setting associated with the target report setting, and
determining a reference signal resource set comprised in the target resource setting to obtain the target reference signal resource.

4. The method according to claim 2, wherein the report configuration information comprises at least one report setting, each report setting corresponds to a reporting type; the report setting is associated with at least one resource setting, the resource setting comprises at least one reference signal resource set, and the reference signal resource set comprises at least one reference signal resource; the first signaling comprises indication information for at least one target reporting type;
before performing or cancelling the measurement on the target reference signal resource based on the first signaling, the method further comprises:
determining, based on the first signaling, a target report setting corresponding to the target reporting type and a target resource setting associated with the target report setting, and
determining a reference signal resource set comprised in the target resource setting to obtain the target reference signal resource.

5. The method according to claim 4, wherein the reporting type comprises: periodic reporting, semi-persistent reporting, or aperiodic reporting; or,
the reporting type comprises: performing a measurement on the reference signal resource of the serving cell and reporting a corresponding measurement result, or performing a measurement on the reference signal resource of the neighboring cell and reporting a corresponding measurement result.

6. The method according to claim 2, wherein the report configuration information comprises at least one trigger state, wherein each trigger state is associated with at least one report setting; the report setting is associated with at least one resource setting, the resource setting comprises at least one reference signal resource set, and the reference signal resource set comprises at least one reference signal resource; the first signaling comprises indication information for at least one target trigger state;
before performing or cancelling the measurement on the target reference signal resource based on the first signaling, the method further comprises:
determining, based on the first signaling, a target report setting associated with the target trigger state and a target resource setting associated with the target report setting, and
determining a reference signal resource set comprised in the target resource setting to obtain the target reference signal resource.

7. The method according to claim 2, wherein the report configuration information comprises at least one reference signal resource set, and the reference signal resource set comprises at least one reference signal resource; the first signaling comprises indication information for at least one target reference signal resource set;
before performing or cancelling the measurement on the target reference signal resource based on the first signaling, the method further comprises: determining the target reference signal resource set based on the first signaling to obtain the target reference signal resource.

8. The method according to any one of claims 3 to 6, wherein the report setting or the resource setting is configured with at least one expected arrival time parameter, wherein the expected arrival time parameter is used to indicate a difference between an arrival time of the reference signal resource of the neighboring cell and an arrival time of the reference signal resource of the serving cell in the report setting or the resource setting.

9. The method according to claim 8, wherein the performing, by the terminal, the measurement on the target reference signal resource based on the first signaling comprises:
during the performing the measurement on the target reference signal resource in the report setting or the resource setting, after a measurement on the target reference signal resource of the serving cell has been done, waiting for a time indicated by the expected arrival time parameter, and then performing a measurement on the target reference signal resource of the neighboring cell.

10. The method according to any one of claims 3 to 6, wherein the report setting comprises at least one of:
indication information for indicating to report measurement values of a first quantity of cells;
indication information for indicating to report a measurement value that meets a preset threshold;
indication information for indicating to report measurement values of a second quantity of preset cells; and
indication information for indicating a threshold for triggering the reporting.

11. The method according to any one of claims 3 to 6, wherein the resource setting further comprises at least one cell identifier, and the cell identifier is configured to be corresponding to the reference signal resource set or the reference signal resource.

12. The method according to any one of claims 3 to 6, wherein each of reference signal resources in the resource setting is numbered with a resource index according to a first rule, and reference signal resources of respective cells have different index numbers.

13. The method according to any one of claims 3 to 6, wherein the report setting comprises a report setting for the serving cell and a report setting for the neighboring cell.

14. The method according to any one of claims 3 to 7, further comprising:
receiving a second signaling, the second signaling being used to activate or deactivate reporting a measurement result by the terminal; and
reporting or cancelling reporting, by the terminal, the measurement result of the target reference signal resource based on the second signaling.

15. The method according to any one of claims 3 to 7, wherein the reference signal resource comprises one or more of: synchronization signal block (SSB), channel state information reference signal (CSI-RS) for mobility, and CSI-RS for tracking.

16. A configuration method for inter-cell measurement reporting, comprising:
transmitting a first signaling to a terminal, wherein the first signaling is used to activate or deactivate a measurement on a target reference signal resource.

17. The method according to claim 16, further comprising:
transmitting report configuration information to the terminal, wherein the report configuration information is used to configure reference signal resources for a serving cell and a neighboring cell.

18. The method according to claim 17, wherein the report configuration information comprises at least one report setting group, the report setting group comprises at least one report setting, the report setting is associated with at least one resource setting, the resource setting comprises at least one reference signal resource set, and the reference signal resource set comprises at least one reference signal resource; the first signaling comprises indication information for at least one target report setting group.

19. The method according to claim 17, wherein the report configuration information comprises at least one report setting, each report setting corresponds to a reporting type; the report setting is associated with at least one resource setting, the resource setting comprises at least one reference signal resource set, and the reference signal resource set comprises at least one reference signal resource; the first signaling comprises indication information for at least one target reporting type.

20. The method according to claim 19, wherein the reporting type comprises: periodic reporting, semi-persistent reporting, or aperiodic reporting; or,
the reporting type comprises: performing a measurement on the reference signal resource of the serving cell and reporting a corresponding measurement result, or performing a measurement on the reference signal resource of the neighboring cell and reporting a corresponding measurement result.

21. The method according to claim 17, wherein the report configuration information comprises at least one trigger state, each trigger state is associated with at least one report setting; the report setting is associated with at least one resource setting, the resource setting comprises at least one reference signal resource set, and the reference signal resource set comprises at least one reference signal resource; the first signaling comprises indication information for at least one target trigger state.

22. The method according to claim 17, wherein the report configuration information comprises at least one reference signal resource set, and the reference signal resource set comprises at least one reference signal resource; the first signaling comprises indication information for at least one target reference signal resource set.

23. The method according to any one of claims 18 to 21, wherein the report setting or the resource setting is configured with at least one expected arrival time parameter, wherein the expected arrival time parameter is used to indicate a difference between an arrival time of the reference signal resource of the neighboring cell and an arrival time of the reference signal resource of the serving cell in the report setting or the resource setting.

24. The method according to any one of claims 18 to 21, wherein the report setting comprises at least one of:
indication information for indicating to report measurement values of a first quantity of cells;
indication information for indicating to report a measurement value that meets a preset threshold;
indication information for indicating to report measurement values of a second quantity of preset cells; and
indication information for indicating a threshold for triggering the reporting.

25. The method according to any one of claims 19 to 21, wherein the resource setting further comprises at least one cell identifier, and the cell identifier is configured to be corresponding to the reference signal resource set or the reference signal resource.

26. The method according to any one of claims 18 to 21, wherein each reference signal resource in the resource setting is numbered with a resource index according to a first rule, and reference signal resources of respective cells have different index numbers.

27. The method according to any one of claims 18 to 21, wherein the report setting comprises a report setting for the serving cell and a report setting for the neighboring cell.

28. The method according to any one of claims 18 to 21, further comprising:
transmitting a second signaling to the terminal, the second signaling being used to activate or deactivate reporting a measurement result by the terminal.

29. The method according to any one of claims 18 to 22, wherein the reference signal resource comprises one or more of: synchronization signal block (SSB), channel state information reference signal (CSI-RS) for mobility, and CSI-RS for tracking.

30. A terminal, comprising a memory, a transceiver and a processor, wherein
the memory is configured to store a computer program;
the transceiver is configured to transmit and receive data under control of the processor; and
the processor is configured to read the computer program in the memory to perform:
receiving a first signaling transmitted by a base station; and
performing or cancelling a measurement on a target reference signal resource based on the first signaling.

31. A terminal, comprising:
a receiving unit, configured to receive a first signaling transmitted by a base station; and
a measurement unit, configured to perform or cancel a measurement on a target reference signal resource based on the first signaling.

32. A network-side device, comprising a memory, a transceiver and a processor, wherein
the memory is configured to store a computer program;
the transceiver is configured to transmit and receive data under control of the processor; and
the processor is configured to read the computer program in the memory to perform:
transmitting a first signaling to a terminal, wherein the first signaling is used to activate or deactivate a measurement on a target reference signal resource.

33. A network-side device, comprising:
a transmission unit, configured to transmit a first signaling to a terminal, wherein the first signaling is used to activate or deactivate a measurement on a target reference signal resource.

34. A processor readable storage medium, wherein the processor readable storage medium stores a computer program, and the computer program is used to enable a processor to perform the method according to any one of claims 1 to 29.
